(19) **Europäisches Patentamt**

**European Patent Office**

**Office européen des brevets**

(11) **EP 1 720 340 A1**

(12) **EUROPEAN PATENT APPLICATION**
published in accordance with Art. 158(3) EPC

(43) Date of publication:
08.11.2006 Bulletin 2006/45

(51) Int Cl.:
*H04N 5/225* (2006.01)   *H04N 5/335* (2006.01)
*H04N 9/09* (2006.01)

(21) Application number: 05790335.3

(22) Date of filing: 07.10.2005

(86) International application number:
**PCT/JP2005/018660**

(87) International publication number:
**WO 2006/046396 (04.05.2006 Gazette 2006/18)**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **28.10.2004 JP 2004314504**

(71) Applicant: **MATSUSHITA ELECTRIC INDUSTRIAL
CO., LTD.
Osaka 571-8501 (JP)**

(72) Inventor: **KORENAGA, Tsuguhiro,
c/o Matsushita El. Ind. Co.
Chuo-ku,
Osaka-shi,
Osaka 540-6319 (JP)**

(74) Representative: **Schorr, Frank Jürgen et al
Diehl & Partner GbR
Augustenstrasse 46
80333 München (DE)**

(54) **CAMERA MODULE**

(57)     A plurality of single lenses (11a to 11d) form images of a subject in a plurality of imaging regions (17a to 17d), respectively, and electrical signals from the plurality of imaging regions are synthesized, whereby an image is obtained. The plurality of single lenses are held by a lens holder (12), and the plurality of imaging regions are held by an imaging device holder (16). The lens holder and the imaging device holder are disposed so as to be opposed to each other. The lens holder includes a member different from a member of the imaging device holder, and a linear expansion coefficient of a material of the lens holder is substantially equal to a linear expansion coefficient of a material of the imaging device holder. The materials of the lens holder and the imaging device holder are different from a material of the plurality of single lenses. Thereby, a high quality image can be obtained stably irrespective of a temperature change, and a distance to a subject can be measured accurately.

FIG. 1

EP 1 720 340 A1

**Description**

Technical Field

The present invention relates to a thin, compact and high-definition compound-eye type camera module capable of measuring a distance to a subject and having stable performance against an ambient temperature change.

Background Art

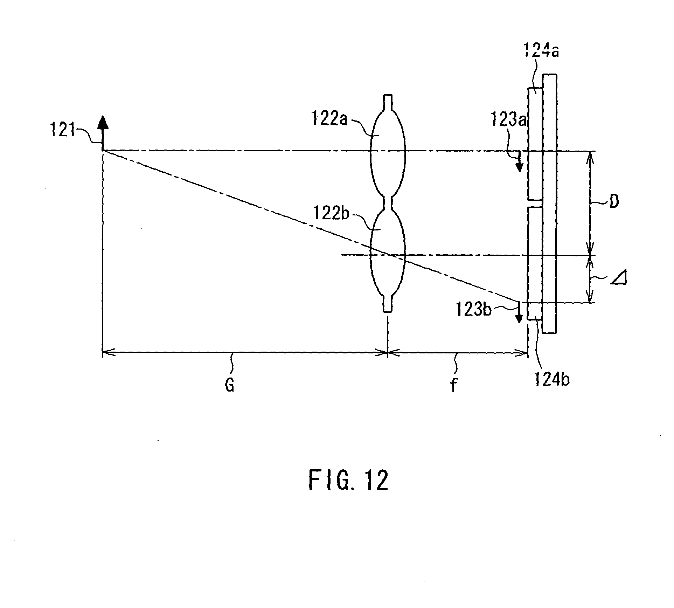

Camera modules for forming an image of a subject on a solid-state imaging device via a lens system are used widely for digital still cameras and mobile phone cameras. In recent years, it has been required for camera modules to have a larger number of pixels in combination with a lower profile. In general, as the number of pixels is increased, a lens system is required to have a higher resolution, and therefore the thickness of a camera module tends to increase in the optical axis direction. In this regard, an attempt has been made to reduce the pixel pitch of a solid-state imaging device so as to reduce the imaging device in size while keeping the same number of pixels, in order to enable the downsizing of a lens system and realize a camera module that combines a larger number of pixels with a lower profile.
However, since sensitivity and a saturation power of a solid-state imaging device are in proportion to a pixel size, there is a limit to decreasing a pixel pitch.
As a camera module, a so-called single-eye type is common, which is composed of one lens system having one or more lenses arranged along the optical axis and one solid-state imaging device disposed on this optical axis. On the other hand, a so-called compound-eye type camera module has been proposed in recent years in order to make a camera module thinner, the compound-eye type camera module being composed of a plurality of lens systems arranged on a common plane and a plurality of imaging regions arranged on a common plane to be in one-to-one correspondence with the plurality of lens systems.
One example of such a compound-eye type camera module is described in JP 2001-61109 A, which will be explained below with reference to Fig. 10.
A lens array 101 is disposed so to be opposed to a photoreceptive element array 103. The lens array 101 is composed of a plurality of microlenses 101a, each having a focal length of about several hundreds μm, arranged and integrated on a common plane, and the photoreceptive element array 103 is composed of a large number of photoreceptive elements arranged on a single plane. A photoreceptive region of the photoreceptive element array 103 is divided into a plurality of imaging regions in one-to-one correspondence with the plurality of microlenses 101a of the lens array 101. One microlens 101a and a plurality of photoreceptive elements included in one imaging region corresponding to this microlens 101a make up one image-formation unit. Between the lens array 101 and the photoreceptive element array 103, a partition wall layer 102 is disposed in order to prevent interference of optical signals between the individual image-formation units. In each image-formation unit, each microlens 101a forms an image of a subject on the corresponding imaging region of the photoreceptive element array 103. Since the positions of the individual microlenses 101a relative to the subject are different, subject images formed at the respective image-formation units differ slightly. Signals from the plurality of imaging regions are calculated so as to synthesize the respective subject images, whereby an image with high resolution can be obtained.
Each microlens 101a on the lens array 101 is a grating lens or a refracting lens formed by etching on a glass substrate. The use of lenses with a short focal length of around several hundreds μm allows a distance between the lens array 101 and the photoreceptive element array 103 to be significantly small, thus enabling a thinner camera module.
Another example of a compound-eye type camera module is described in JP 2001-78217 A, which will be explained below with reference to Fig. 11. Fig. 11 illustrates only the major portion of the camera module. A lens array 112 having three lenses 111a, 111b and 111c is disposed so as to be opposed to a solid-state imaging device 114. On a face of the lens array 112 on the subject side is provided a green spectral filter 113a, a red spectral filter 113b and a blue spectral filter 113c at positions opposed to the three lenses 111a, 111b and 111c, respectively. A face of the solid-state imaging device 114 on the lens array 112 side also is provided with a green spectral filter 115a, a red spectral filter 115b and a blue spectral filter 115c at positions opposed to the three lenses 111a, 111b and 111c, respectively. Thereby, the green spectral filter 113a, the lens 111a, the green spectral filter 115a and an imaging region of the solid-state imaging device 114 on which the green spectral filter 115a is provided make up a green-light image formation unit. Similarly, the red spectral filter 113b, the lens 111b, the red spectral filter 115b and an imaging region of the solid-state imaging device 114 on which the red spectral filter 115b is provided make up a red-light image formation unit, and the blue spectral filter 113c, the lens 111c, the blue spectral filter 115c and an imaging region of the solid-state imaging device 114 on which the blue spectral filter 115c is provided make up a blue-light image formation unit. Signals from the three image-formation units are calculated so as to synthesize the respective subject images, whereby a color image can be obtained.
In a compound-eye type camera module, a parallax generated between a plurality of images obtained from the plurality of image-formation units can be used to measure a distance to a subject. Fig. 12 shows the principle of measuring a distance to a subject using the parallax.

A light beam from a subject 121 passing through a lens 122a forms an image on a solid-state imaging device 124a as a subject image 123a, and a light beam from the subject 121 passing through a lens 122b forms an image on a solid-state imaging device 124b as a subject image 123b. At this time, the light beams from the same point of the subject 121 deviate from each other by the parallax $\Delta$ to arrive at the solid-state imaging devices 124a and 124b, respectively, so as to be received by pixels on the solid-state imaging devices 124a and 124b and converted to electrical signals.

Herein, assuming that a distance between the optical axes of the lenses 122a and 122b is D, a distance between the lenses and the subject 121 is G and the focal length of the lenses is f, when the distance G is significantly larger than the focal length f, the following equality (1) will be satisfied:

$$G = Df/\Delta \qquad \cdots (1).$$

The distance D between the optical axes of the lenses 122a and 122b and the focal length f of the lenses are known. By determining the positional deviation amount between the subject images 123a and 123b of the solid-state imaging devices 124a and 124b, i.e., the parallax $\Delta$, in accordance with the electrical signals from the solid-state imaging devices 124a and 124b, the distance G to the subject can be calculated using the equality (1). In this way, a compound-eye type camera module functions not only to form an image but also as a distance-measuring sensor.

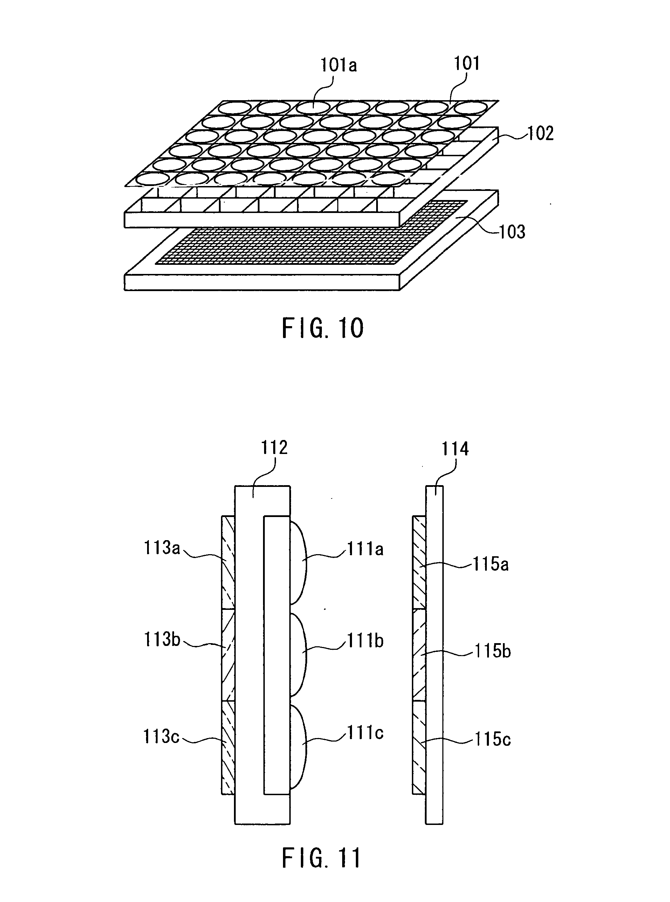

In the compound-eye type camera modules of Fig. 11 and Fig. 12, corresponding points are extracted from a plurality of images obtained from a plurality of image-formation units, and the plurality of images are synthesized so that the corresponding points on these plurality of images can be overlapped with one another, whereby a synthesized image can be formed.

However, if a position of a lens relative to the corresponding imaging region fluctuates due to an ambient temperature change, the synthesized image will be degraded or an image processing time will be increased significantly.

JP 2001-78127 A discloses, assuming that a change in the ambient temperature is within around $\pm 20°C$, an interval A (mm) between the corresponding points of subject images formed on the individual imaging regions, a linear expansion coefficient $\alpha_L$ of a material of the lens array 112 and a pixel pitch P (mm) of the solid-state imaging device 114 satisfy the following inequality:

$$2 \times A \times (\alpha_L - 0.26 \times 10^{-5}) \times 20 < P/2 \qquad \cdots (2).$$

In the left side of the inequality (2), "$0.26 \times 10^{-5}$" is the linear expansion coefficient of the solid-state imaging device 114, and "20" is a temperature variation (°C). JP 2001-78217 A assumes an example where the pixel pitch P of the solid-state imaging device 114 is 2.8 $\mu$m, the diagonal length is 2.8 mm and the number of pixels is 480,000. According to this reference, a glass material with $\alpha_L$ of $1.2 \times 10^{-5}$ is effective as the material of the lens array 112 in such an example.

Disclosure of Invention

Problem to be Solved by the Invention

However, as is understood from the inequality (2) shown in JP 2001-78127 A, in order to obtain a stable and favorable image against the ambient temperature change, a material having a small linear expansion coefficient should be used for the material of the lens array in a compound-eye type camera module. As a result, glass has to be used in practice as a transparent material for a lens satisfying this condition, and therefore there are problems in terms of cost efficiency and productivity as compared with a resin material that is used currently and widely for a single-eye type camera module.

Moreover, even when a glass material having a small linear expansion coefficient is used, it is impossible to increase the ratio A/P, where A is an interval between the corresponding points of subject images formed on the individual imaging regions and P is a pixel pitch. Thus, the upper limit of the number of pixels of a solid-state imaging device is limited to several hundreds thousands, and therefore a high-definition image cannot be obtained.

Furthermore, even when a distance from lenses to a subject is fixed, the parallax $\Delta$ will change in accordance with an ambient temperature change. This is because a variation in distance between lenses due to a temperature change does not agree with a variation in distance between imaging regions. Therefore, when the ambient temperature changes, the distance G to the subject cannot be measured accurately using the equality (1).

In order to cope with the above-stated conventional problems, it is an object of the present invention to provide a thin, compact and high-definition compound-eye type camera module having favorable productivity and stable performance against an ambient temperature change.

Means for Solving Problem

A camera module of the present invention includes a plurality of single lenses and a plurality of imaging regions in one-to-one correspondence with the plurality of single lenses. The plurality of single lenses form images of a subject in the plurality of imaging regions, respectively, and electrical signals from the plurality of imaging regions are synthesized so as to obtain an image.

The camera module further includes: a lens holder that holds the plurality of single lenses; and an imaging device holder that holds the plurality of imaging regions. The lens holder and the imaging device holder are disposed so as to be opposed to each other. The lens holder includes a member different from a member of the imaging device holder, and a linear expansion coefficient of a material of the lens holder is substantially equal to a linear expansion coefficient of a material of the imaging device holder. The materials of the lens holder and the imaging device holder are different from a material of the plurality of single lenses.

Effects of the Invention

According to the present invention, even when the ambient temperature changes, a relative displacement between a single lens and the corresponding imaging region is slight. Therefore, a high quality image can be obtained stably irrespective of a temperature change, and a distance to a subject can be measured accurately. Furthermore, according to the present invention, a thin, compact and high-definition camera module having a favorable productivity can be provided.

Brief Description of Drawings

[Fig. 1] Fig. 1 is an exploded perspective view showing the schematic configuration of a camera module according to Embodiment 1 of the present invention.

[Fig. 2] Fig. 2 is a cross-sectional view of the camera module according to Embodiment 1 of the present invention taken along the optical axis.

[Fig. 3A] Fig. 3A shows one example of the light quantity peak positions when a white light source placed at substantially infinity is captured using four solid-state imaging devices of the camera module according to Embodiment 1 of the present invention.

[Fig. 3B] Fig. 3B shows one example of the light quantity distribution when a white light source placed at substantially infinity is captured using four solid-state imaging devices of the camera module according to Embodiment 1 of the present invention.

[Fig. 4] Fig. 4 is a cross-sectional view of the camera module according to Embodiment 1 of the present invention taken along the optical axis.

[Fig. 5] Fig. 5 is a cross-sectional view for explaining a method for forming and holding lenses in a lens holder in the camera module according to Embodiment 1o of the present invention.

[Fig. 6] Fig. 6 is a side view showing one example of a lens holder with lenses obtained by the method of Fig. 5.

[Fig. 7] Fig. 7 is an exploded perspective view showing the schematic configuration of a camera module according to Embodiment 2 of the present invention.

[Fig. 8] Fig. 8 is a cross-sectional view of a camera module according to Embodiment 2 of the present invention taken along the optical axis.

[Fig. 9] Fig. 9 is a cross-sectional view of a camera module according to Embodiment 3 of the present invention taken along the optical axis.

[Fig. 10] Fig. 10 is an exploded perspective view showing the schematic configuration of one example of a conventional compound-eye type camera module.

[Fig. 11] Fig. 11 is a side view showing the schematic configuration of another example of a conventional compound-eye type camera module.

[Fig. 12] Fig. 12 shows the principle of measuring a distance to a subject using the parallax in a compound-eye type camera module.

Description of the Invention

In the above-stated camera module of the present invention, it is preferable that a distance to the subject is measured by comparing the electrical signals from the plurality of imaging regions. Thereby, the camera module of the present invention can be used as a distance-measuring device with high precision. For instance, distances to a part of subjects or all of the subjects in a field of view can be measured.

In the above-stated camera module of the present invention, it is preferable that the lens holder and the imaging device holder are both made of silicon. When the imaging device holder is made of silicon, the imaging device holder has a linear expansion coefficient substantially equal to those of solid-state imaging devices and a digital signal processor (DSP), thus facilitating the assembly process and wiring formation and securing sufficient reliability. Further, since the lens holder and the imaging device holder are made of the same material, they have the same linear expansion coefficient, and therefore a change of performance due to a temperature change can be suppressed.

It is preferable that the above-stated camera module of the present invention further includes a spacer between the lens holder and the imaging device holder. This can prevent unnecessary light from entering the imaging regions from the periphery of the camera module.

In the above-stated camera module of the present invention, it is preferable that the plurality of single lenses are made of a resin so that the plurality of single lenses are independent of and separated from one another. Thereby, each lens expands and shrinks separately from the other lenses, and therefore a stable image can be obtained against an ambient temperature change irrespective of the intervals of the lenses.

It is preferable that the above-stated camera module of the present invention further includes a plurality of color filters in one to one correspondence with the plurality of single lenses. At least one of the plurality of color filters lets red wavelength range light enter in the imaging region, at least another color filter lets green wavelength range light enter in the imaging region and at least still another color filter lets blue wavelength range light enter in the imaging region. Thereby, there is no need for each lens to deal with the entire wavelength range of visible light, and a lens with a small aberration just for the individual wavelength range of red, green or blue will suffice. Thus, sufficient performance can be secured with a single lens, and accordingly an optical system of the camera can be made thinner.

Particularly, it is preferable that at least two of the plurality of color filters let light in a same wavelength range pass therethrough. Thereby, a parallax can be determined by comparing at least two subject images obtained from the light in the same wavelength range so as to measure a distance from the camera to the subject.

In the above-stated camera module of the present invention, it is preferable that each of the plurality of single lenses includes diffraction gratings on both sides. Thereby, an aberration can be reduced, and a high-quality image can be obtained without loss of a resolution of the imaging regions having a fine pixel pitch. Furthermore, since the performance equivalent to that of an aspherical lens can be realized with a thinner lens, a camera module can be made thinner.

In the above-stated camera module of the present invention, it is preferable that optical axes of the plurality of single lenses are perpendicular to photoreceptive faces of the corresponding imaging regions, respectively, and pass substantially through centers of the corresponding imaging regions, respectively. Thereby, a high-resolution image can be formed on a wide area of the imaging region, so that a high-resolution image can be obtained by increasing the number of pixels. Preferably, the displacement amount between the optical axis of a single lens and the center of the imaging region is 10 $\mu$m or less.

It is preferable that the above-stated camera module of the present invention further includes a detector that detects a focal position of an subject image; an actuator that changes an interval between the lens holder and the imaging device holder along an optical axis; and a controller that controls the actuator in accordance with the focal position detected by the detector. Thereby, even in the case where a focal position is displaced in the direction of the optical axis due to an ambient temperature change, a blurring-free image can be obtained.

It is preferable that the spacer prevents the imaging region from receiving light passing through the single lenses other than the single lens corresponding to the imaging region. This can prevent unnecessary colored light from entering in the imaging region, thus avoiding degradation in color reproduction of an image.

In the above-stated camera module of the present invention, it is preferable that a coating for suppressing surface reflection is applied to a face of the lens holder opposed to the imaging device holder and a face of the imaging device holder opposed to the lens holder. This can prevent unnecessary light from entering in the imaging regions, thus deterring flare and ghosts.

It is preferable that the coating includes a single layer film with a refractive index of 2.1 and a thickness of 140 nm, and the single layer film is made of a material selected from the group consisting of zinc sulfide, cerium oxide, tantalum oxide and titanium oxide. Thereby, in the case where the lens holder and the imaging device holder are made of silicon, sufficient antireflection effects can be obtained with a single layer film, and the reflection of unnecessary light can be prevented.

In the above-stated camera module of the present invention, it is preferable that the lens holder that holds the plurality of single lenses is obtained by sandwiching the lens holder between a pair of molding pieces, followed by injection molding of a resin within a cavity farmed with the lens holder and the pair of molding pieces. Thereby, a plurality of lenses can be formed and at the same time the lenses can be mounted on the lens holder by a simple process.

Alternatively, it is preferable that, in the above-stated camera module of the present invention, the lens holder that holds the plurality of single lenses is obtained by sandwiching the lens holder between a pair of molding pieces, filling a cavity formed with the lens holder and the pair of molding pieces with an ultraviolet curing resin, and curing the ultraviolet curing resin by irradiation with ultraviolet rays. Thereby, a plurality of lenses can be formed and at the same time the lenses can be mounted on the lens holder by a simple process.

The following describes preferred embodiments of the present invention with reference to the drawings.

(Embodiment 1)

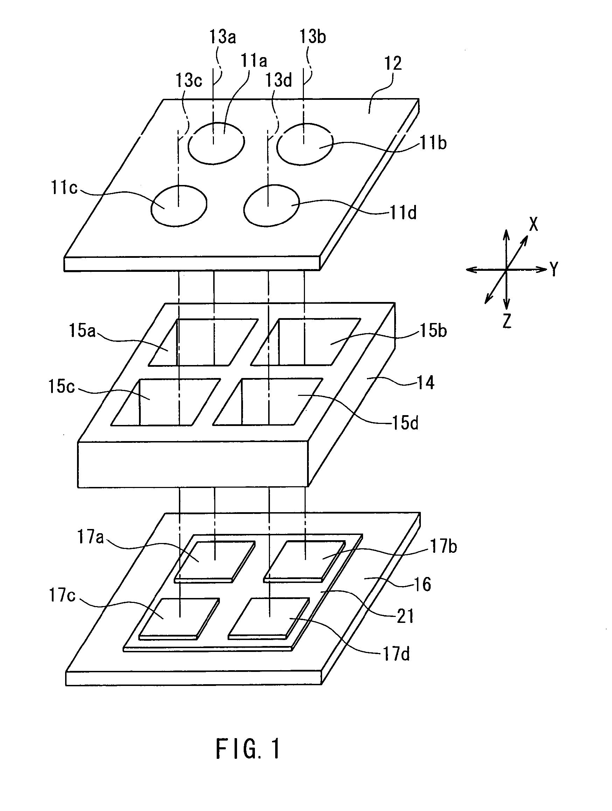

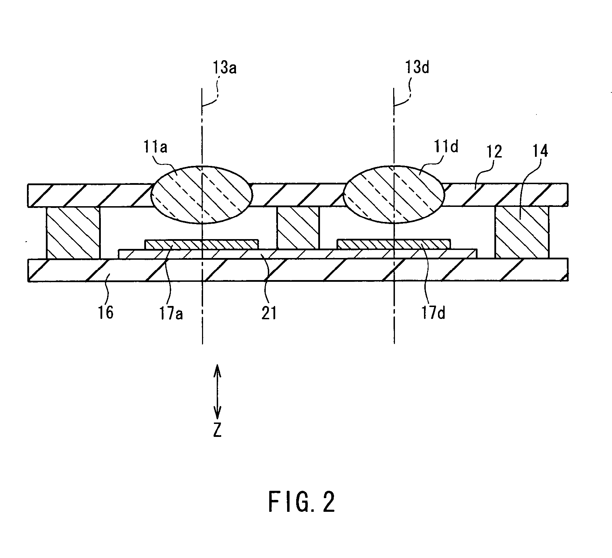

Fig. 1 is an exploded perspective view showing the schematic configuration of a camera module according to Embodiment 1 of the present invention. Fig. 2 is a cross-sectional view of the camera module according to Embodiment 1 taken along the optical axis.

Four lenses 11a, 11b, 11c and 11d are double-sided aspherical single lenses that are independent of one another, and are arranged and aligned by a lens holder 12 on a substantially common plane. Optical axes 13a, 13b, 13c and 13d of the four lenses 11a, 11b, 11c and 11d are each parallel to the normal of a principal plane of the lens holder 12. Herein, as shown in Fig. 1, it is assumed that the direction parallel to the optical axes 13a, 13b, 13c and 13d is the Z-axis, one direction perpendicular to the Z-axis is the X-axis and the direction perpendicular to the Z-axis and the X-axis is the Y-axis. The lenses 11a, 11b, 11c and 11d are arranged on a X-Y plane at lattice points formed with lines parallel to the X-axis and lines parallel to the Y-axis.

A color filter is applied to a first plane (a plane on the subject side) of each lens, the color filter letting any one of red, blue and green wavelength range light, i.e., any one of three primary colored lights, pass therethrough. As a result, the lens 11a and the lens 11d let green light pass therethrough, the lens 11b lets red light pass therethrough and the lens 11c lets blue right pass therethrough.

The lens holder 12 is made of silicon. A hole is punched at a portion for holding a lens. Antireflection coating is applied to a rear-face side (a face on the side opposite to the subject) of the lens holder 12. More specifically, a single-layer film of zinc sulfide with a refractive index of 2.1 and a thickness of 140 nm is formed. Zinc sulfide is a non-limiting example, as long as the refractive index is around 2.1. For instance, cerium oxide, tantalum oxide and titanium oxide are available.

Alight-shielding spacer 14 is attached to the face of the lens holder 12 on the side opposite to the subject. The light-shielding spacer 14 is provided with apertures (through holes) 15a, 15b, 15c and 15d whose centers are aligned with the optical axes 13a, 13b, 13c and 13d of the four lenses, respectively. Alight antireflection treatment is applied to the inner walls forming the apertures. More specifically, a matting treatment is applied so as to suppress the reflection at the surface by black painting and surface roughening, for example. This can prevent the stray light reflected by the inner walls from entering in the solid-state imaging devices.

An imaging device holder 16 is attached to the face of the light-shielding spacer 14 on the side opposite to the subject. The imaging device holder 16 is made of silicon, and an antireflection coating similar to that provided for the lens holder 12 is applied to the imaging device holder 16 at the face opposed to the lens holder 12. On the face of the imaging device holder 16 on the side of the light-shielding spacer 14, four solid-state imaging devices 17a, 17b, 17c and 17d are arranged on a substantially common plane (on a X-Y plane). The optical axes 13a, 13b, 13c and 13d of the four lenses pass through the centers (a point of intersection of diagonal lines of a rectangular solid-state imaging device) of the respective four solid state imaging devices substantially. Therefore, an interval between the centers of the solid-state imaging devices is substantially equal to an interval between the centers of the lenses. The solid-state imaging devices perform monochrome sensing and do not have color filters therein.

Fig. 2 is a cross-sectional view of the camera module of Fig. 1 taken along the plane including the optical axes 13a and 13d. A substrate 21 including a digital signal processor (DSP) is provided on the imaging device holder 16, on which the four solid-state imaging devices 17a, 17b, 17c and 17d are arranged.

In the camera module of the present embodiment, among light incident on the single lenses 11a and 11d from the subject, green light is incident on the solid-state imaging devices 17a and 17d, respectively. Among light incident on the single lens 11b from the subject, red light is incident on the solid-state imaging device 17b. Among light incident on the single lens 11c from the subject, blue light is incident on the solid-state imaging device 17c. In this way, the light from the subject is separated into green wavelength range light, red wavelength range light and blue wavelength range light, which are then captured by the solid-state imaging devices 17a, 17b, 17c and 17d. Four images captured by these four solid-state imaging devices 17a, 17b, 17c and 17d are synthesized, whereby a color image can be obtained. Such synthesis is carried out by the digital signal processor (DSP).

The camera module of the present embodiment is provided with four image-formation units each including one lens and one solid-state imaging device corresponding to the lens.

The light-shielding spacer 14 is provided with the independent four apertures 15a, 15b, 15c and 15d corresponding to the four image-formation units, which can prevent each solid-state imaging device from receiving light from the lenses other than the lens corresponding to the each solid-state imaging device. Thus, degradation in image quality can be avoided.

Since the positions of the four lenses 11a, 11b, 11c and 11d relative to the subject are different from each other, a displacement resulting from a parallax will occur between the four images captured by the four solid-state imaging devices 17a, 17b, 17c and 17d. In this regard, synthesis may be carried out so that two green wavelength range images, captured by the solid-state imaging devices 17a and 17d arranged in the diagonal quadrants receiving the green wavelength range light as shown in Fig. 1, can agree with each other. Thereby, the X-direction component and the Y-direction component of the parallax (displacement) between the two images can be obtained. Then, the synthesis rule for the images in the X-direction and the Y-direction can be derived therefrom. This synthesis rule for two directions is applied for synthesizing the red wavelength range image and the blue wavelength range image with the green wavelength range image, whereby a color image can be obtained. In the above, two green wavelength range images are used for correcting the displacement of images resulting from a parallax. This is because a clear image can be obtained by increasing green light signals to which human eyes are more sensitive.

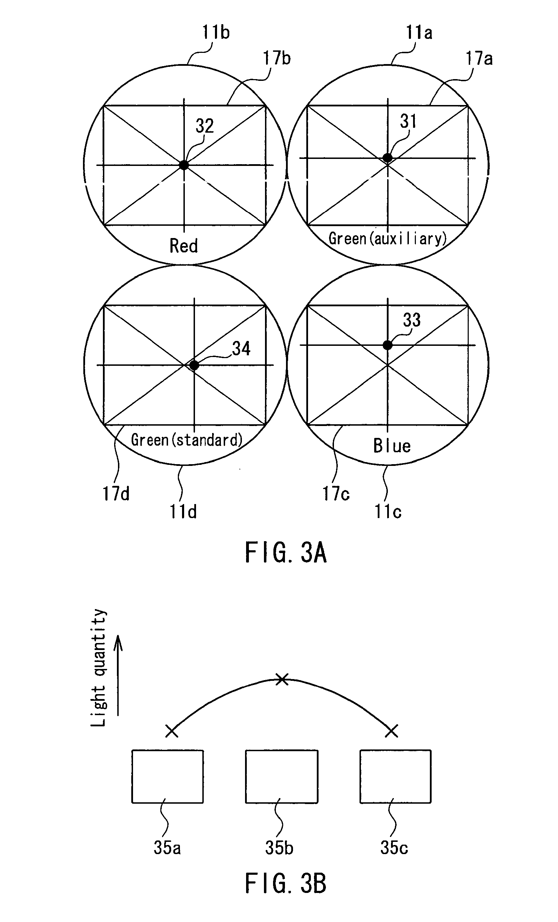

As a precondition for synthesizing four images obtained from the four solid-state imaging devices 17a, 17b, 17c and 17d, it is necessary to recognize which pixels capturing the same portion of the subject are located at which portions of the respective solid-state imaging devices. One example of such recognition method will be described below, with reference to Fig. 3A and Fig. 3B.

As shown in Fig. 3A, a white light source (preferably, a light source that can be regarded as a point light source in practice) placed at substantially infinity (e.g., at a distance of 10 m) is captured, and positions (pixels) where the quantity of light reaches the peak may be origins 31, 32, 33 and 34 of the respective solid-state imaging devices 17a, 17b, 17c and 17d, whereby the locations of a large number of pixels making up the respective solid-state imaging devices can be identified. After assembling a camera module, the origins 31, 32, 33 and 34 of the respective solid-state imaging devices may be determined using this method, thus eliminating the necessity of aligning accurately the solid-state imaging devices during assembly such as during mounting and facilitating the manufacturing of the camera module.

Even in the case of a substantially point light source located at substantially infinity, the image thereof cannot be captured with only one pixel. The distribution of the quantity of light from a substantially white light source at a photoreceptive face of a solid-state imaging device is shown in Fig. 3B as one example. In this case, among pixels 35a, 35b and 35c, the pixel 35b having the maximum quantity of light received may be the origin of this solid-state imaging device.

Based on the thus identified origins of the solid-state imaging devices, the above-stated parallax between the image-formation units can be determined.

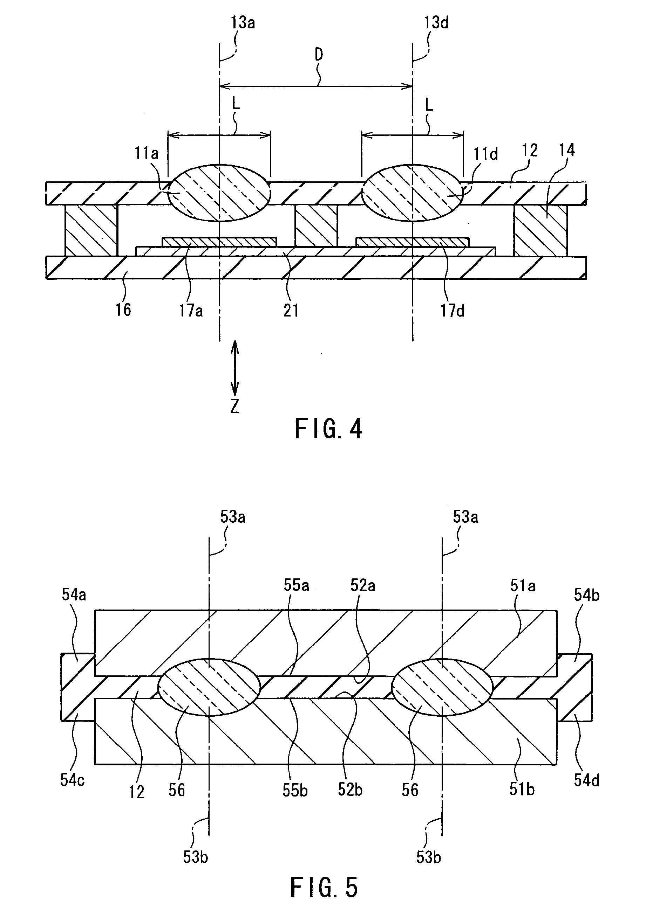

Referring now to Fig. 4, an influence of an ambient temperature change on the camera module of the present embodiment will be described below. Similarly to Fig. 2, Fig. 4 is a cross-sectional view of the camera module according to the present embodiment taken along the plane including the optical axes 13a and 13d.

In the following, it is assumed that after the operation of identifying origins of the solid-state imaging devices as described above referring to Fig. 3A and Fig. 3B is carried out, the ambient temperature rises by $\Delta\tau$ (°C).

At this time, since the lens holder 12 and the imaging device holder 16 expand, an interval between the centers of lenses and an interval between the centers of the solid-state imaging devices are increased. If a variation in the interval between the centers of the lenses is different from a variation in the interval between the centers of the solid-state imaging devices, the above-stated predetermined origins of the solid-state imaging devices will be displaced.

Assuming that a diameter of the lenses is L (mm), linear expansion coefficients of the lenses, the solid-state imaging devices, the lens holder and the imaging device holder are $\alpha$, $\beta$, $\gamma$ and $\delta$, respectively, and an interval between optical axes 13a and 13d (or 13b and 13c) that are adjacent in the diagonal direction is D, the displacement amount $\Delta d$ of the origins on the solid-state imaging devices, resulting from the rise of the ambient temperature by $\Delta\tau$, will be given by the following equality:

$$\Delta d = D \cdot |\gamma - \delta| \cdot \Delta\tau / 2 \qquad \cdots (3).$$

As is understood from the equality (3), the displacement amount $\Delta d$ of the origins of the camera module of the present invention is totally irrelevant to the linear expansion coefficients $\alpha$ and $\beta$ of the lenses and the solid-state imaging devices and the lens diameter L.

For instance, in the case where each of the solid-state imaging devices 17a, 17b, 17c and 17d has one million pixels (a photoreceptive portion) and their pixel pitch in the diagonal direction (the direction connecting the optical axes 13a and 13d) is 2.8 $\mu$m, then the length T of the diagonal line of each solid-state imaging device is about 2.8 mm. It is assumed that the diameter L of each of the lenses 11a, 11b and 11c and 11d is 1.6 mm and their focal length is 2.5 mm. An assumed lens material is a commonly available polyolefin based thermoplastic resin (e.g., ZEONEX480 produced by ZEON Corporation, having a linear expansion coefficient $\alpha$ of $6 \times 10^{-5}$).

Assuming that the distance D between the lens optical axes is 3 mm that is slightly larger than the length T of the diagonal line of the solid-state imaging devices, and when the variation $\Delta\tau$ of the ambient temperature is 20°C, the condition for allowing the displacement amount $\Delta$d of the origins to be less than 1/10 of the pixel pitch of 2.8 $\mu$m will be as follows, based on the equality (3):

$$|\gamma - \delta| \le 0.94 \times 10^{-5}\,/°C \qquad \cdots (4).$$

Herein, the permissible upper limit of the displacement amount $\Delta$d of the origins is set at 1/10 of the pixel pitch, which is based on the fact that such a degree of image synthesis accuracy is required for suppressing the degradation of a resolution of the synthesized image.

Materials of the lens holder 12 and the imaging device holder 16 may be selected so as to satisfy the relationship of the above-stated inequality (4), whereby the origin positions will not change substantially and there is no influence on the image synthesis even when the temperature changes by about 20°C with reference to the temperature for the origin identification after the origins of the solid-state imaging devices 17a and 17d are identified.

More specifically, the inequality (4) will be satisfied when the material of the lens holder 12 is quartz (linear expansion coefficient: $0.04 \times 10^{-5}$) and the material of the imaging device holder 16 is silicon ($0.3 \times 10^{-5}$), for example.

In this way, according to the camera module of the present embodiment, even when the temperature changes during operation, there is no need to modify the calculation for obtaining a color image when four images obtained from four solid-state imaging devices are synthesized. In other words, the image synthesis can be performed under the same conditions using the same pixels as origins irrespective of the temperature change. Thus, the digital signal processor (DSP) can be simplified. In this way, according to the present embodiment, a thin and high-definition image of one million pixels or more can be obtained, which can be free from the degradation due to the ambient temperature change.

Furthermore, the two green wavelength range images captured by the solid-state imaging devices 17a and 17d may be compared so as to calculate their parallax, and a distance from the camera to the subject can be measured by calculating using the equality (1). At this time, in the case where the above-stated inequality (4) is satisfied, an influence of the ambient temperature change on the parallax can be suppressed within 1/10 or less of the pixel pitch, i.e., 0.28 $\mu$m or less, when the ambient temperature change is about 20°C or lower. Therefore, according to the camera module of the present embodiment, even when the temperature changes during operation, any problems concerning the degradation of accuracy for the measurement of a distance to a subject do not occur.

In the present embodiment, the materials of the lens holder 12 and the imaging device holder 16 may have substantially the same linear expansion coefficient. In general, the materials of the solid-state imaging devices 17a, 17b, 17c and 17d and the substrate of the digital signal processor (DSP) contain silicon as the main component. The imaging device holder 16 having substantially the same linear expansion coefficient of the linear expansion coefficients of the solid-state imaging devices and the digital signal processor (DSP) mounted thereon will be advantageous in terms of assembly and wiring formation process, warpage prevention and reliability enhancement. Therefore, the material of the imaging device holder 16 preferably is silicon. Moreover, in order to reduce the displacement amount $\Delta$d of the origins due to a change of the ambient temperature $\Delta\tau$, the preferable material of the lens holder 12 also is silicon.

In the compound-eye type camera module of the present embodiment, the light from the subject is separated into green wavelength range light, red wavelength range light or blue wavelength range light at each image-formation unit, and each solid-state imaging device captures an image in any one color of the three primary colors. In this embodiment, the number of the image-formation units capturing images of green wavelength range light is two. The two green images obtained by these two image-formation units are compared so as to determine their parallax, whereby a distance to the subject is measured, and a color image can be obtained by synthesizing the respective colored images of green, red and blue images. By comparing the images in the same color, the parallax can be determined more accurately, so that the accuracy of the distance measurement can be enhanced, and a high-quality color image can be obtained.

In the compound-eve type camera module of the present embodiment, the light from the subject is separated into green wavelength range light, red wavelength range light or blue wavelength range light at each image-formation unit, and each solid-state imaging device captures an image in any one color of the three primary colors. However, the camera module of the present invention is not limited to such a mode. For instance, instead of separating into each color at each image-formation unit, a compound-eye type camera module including each solid-state imaging device capturing a full-color image is also possible (see JP 2001-61109 A, for example). In this mode also, a process of synthesizing color images obtained from the solid-state imaging devices into one image is required, and such a process also requires identifying the origin pixels as described above. Therefore, the present invention is applicable widely to compound-eye type camera modules in general.

The following describes a method for forming and keeping the lenses 11a, 11b, 11c and 11d in the lens holder 12 of the camera module of the present embodiment without displacement of optical axes, with reference to Fig. 5.

In the camera module of the present embodiment, since the lens holder 12 and the solid-state imaging device holder 16 are made of mutually independent members, the following lens formation method can be adopted.

A lens holder 12 that has been manufactured beforehand is sandwiched between upper and lower molding pieces 51a and 51b in each of which the inverted shape of the lens shape has been formed. At this time, reference planes 52a and 52b of the respective molding pieces 51a and 51b are perpendicular to optical axes 53a and 53b of the inverted lens shape formed in the molding pieces 51a and 51b, respectively. The reference plane 52a of the upper molding piece 51a is brought into intimate contact with an upper face 55a of the lens holder 12 and the reference plane 52b of the lower molding piece 51b is brought into intimate contact with a lower face 55b of the lens holder 12, whereby the positions of the lens holder 12 and the molding pieces 51a and 51b are confined mutually in the direction parallel to the optical axes 53a and 53b. Furthermore, stoppers 54a, 54b, 54c and 54d formed on the periphery of the lens holder 12 are brought into contact with the side faces of the upper and lower molding pieces 51a and 51b, whereby the positions of the lens holder 12 and the molding pieces 51a and 51b are confined mutually in the direction orthogonal to the optical axes 53a and 53b. Thereby, the optical axis 53a of the inverted lens shape formed in the upper molding piece 51a agrees with the optical axis 53b in the inverted lens shape formed in the lower molding piece 51b. In this state, injection molding is performed by pouring through a gate (not illustrated) of the molding pieces a thermosetting resin having a viscosity lowered by heating into a cavity 56 formed with the apertures formed in the lens holder 12 and the molding pieces 51a and 51b.

With this method, lenses 11a, 11b, 11c and 11d having arbitrary aspheric shapes can be obtained, and moreover the respective lenses can be aligned and held in the lens holder 12 so that the optical axes 13a, 13b, 13c and 13d of the lenses can be parallel to the normal of the lens holder 12.

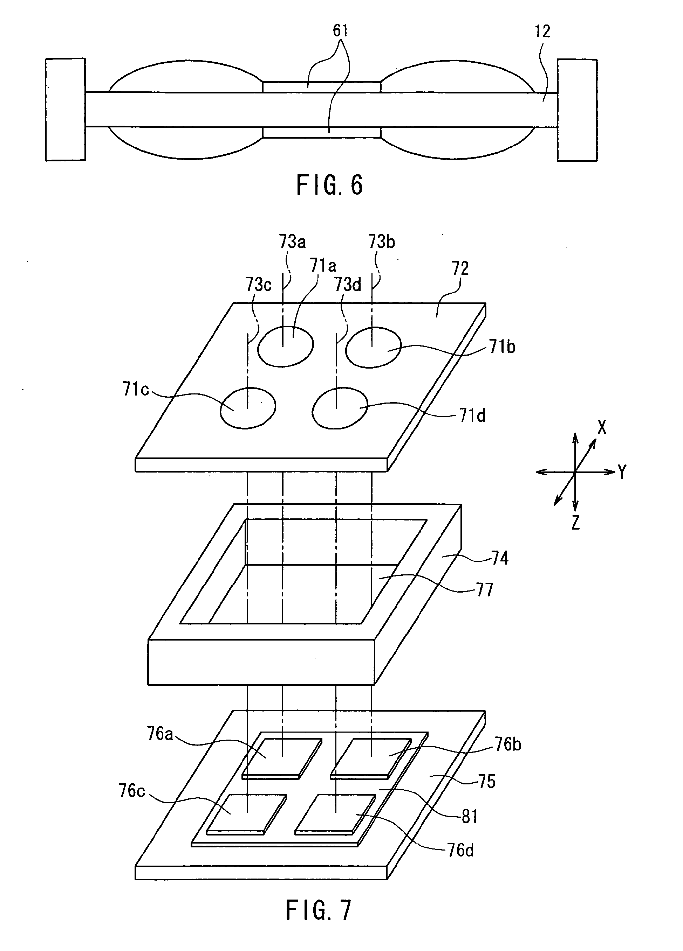

After molding the lenses, a resin layer 61 may adhere to the surface of the lens holder 12 between the adjacent lenses as shown in Fig. 6. This resin layer 61 may be a problem in terms of the reliability of the lens and images. Therefore, this resin layer 61 preferably is removed by a subsequent processing so as to separate the lenses to be independent of each other.

Fig. 5 shows the example where the molding pieces 51a and 51b have the inverted shape of the plurality of lenses. However, four molding pieces each having an inverted shape of one lens may be arranged above and below the lens holder 12, whereby four lenses may be molded.

In Fig. 5, a thermosetting resin is used as the lens material. However, a transparent ultraviolet curing resin may be used. As a method for filling an inside of the molding pieces with such a lens material, a gate may be used similarly to Fig. 5. Molding pieces made of a material that lets ultraviolet rays pass therethrough, such as quartz, may be used, whereby the lens material is irradiated with ultraviolet rays through such molding pieces, and the lenses can be molded integrally with the lens holder 12 in a similar manner to Fig. 5.

Conventionally, a method of forming a resin lens by various ways on a surface of a transparent substrate having a linear expansion coefficient smaller than resin, e.g., on a glass board has been used. According to such a method, however, it is difficult to form a lens whose both sides are curved surfaces. On the other hand, according to the above-stated method, the shape of the both sides of a lens can be set freely. For instance, a double-sided aspherical lens and a double-sided diffraction grating lens can be formed, and the use of such lenses enables a high-resolution image that is difficult to realize by the conventional method. Such a high-resolution image is resolved with a solid-state imaging device having a fine pixel pitch, whereby a parallax can be determined with higher precision. Therefore, the accuracy of measuring a distance to a subject can be enhanced further.

(Embodiment 2)

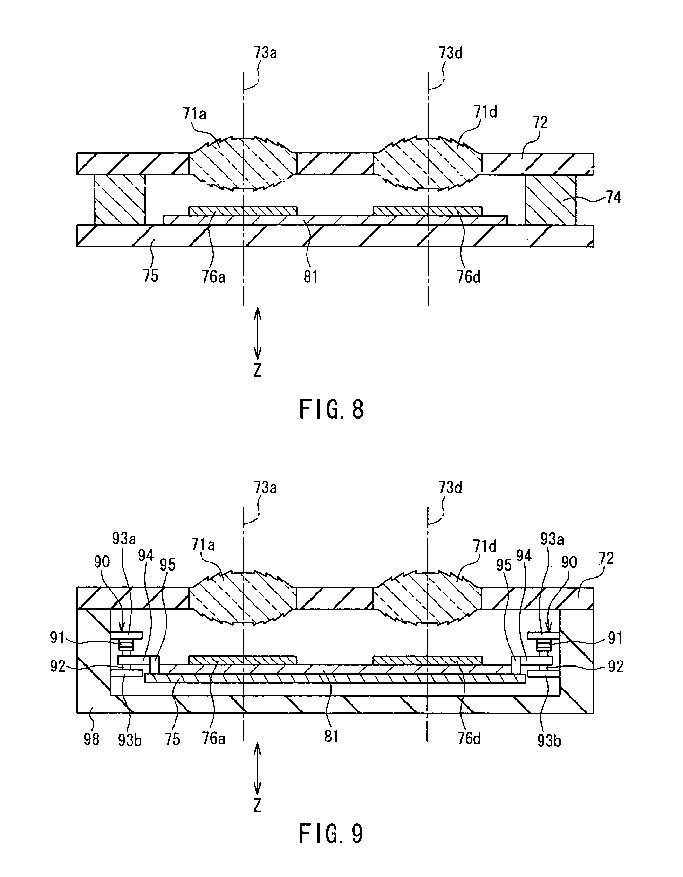

Fig. 7 is an exploded perspective view showing the schematic configuration of a camera module according to Embodiment 2 of the present invention. Fig. 8 is a cross-sectional view of the camera module according to Embodiment 2 taken along the optical axis.

Four lenses 71a, 71b, 71c and 71d are aspherical single lenses with diffraction gratings on both sides. The lenses are independent of one another, and are arranged and aligned by a lens holder 72 on a substantially common plane. Optical axes 73a, 73b, 73c and 73d of the four lenses 71a, 71b, 71c and 71d are each parallel to the normal of a principal plane of the lens holder 72. Herein, as shown in Fig. 7, it is assumed that the direction parallel to the optical axes 73a, 73b, 73c and 73d is the Z-axis, one direction perpendicular to the Z-axis is the X-axis and the direction perpendicular to the Z-axis and the X-axis is the Y-axis. The lenses 71a, 71b, 71c and 71d are arranged on a X-Y plane at lattice points formed with lines parallel to the X-axis and lines parallel to the Y-axis.

The lens 71a and the lens 71d are aspherical single lenses with diffraction gratings on both sides, whose diffraction efficiency and image-formation performance are optimized for green light. The lens 71b is an aspherical single lens with diffraction gratings on both sides, whose diffraction efficiency and image-formation performance are optimized for red light. The lens 71c is an aspherical single lens with diffraction gratings on both sides, whose diffraction efficiency and image-formation performance are optimized for blue light.

The lens holder 72 is made of silicon, which is similar to the lens holder 12 of Embodiment 1, and therefore the detailed explanations thereof are not repeated.

Alight-shielding spacer 74 is attached to the face of the lens holder 72 on the side opposite to the subject. The light-shielding spacer 74 is provided with one aperture (through hole) 77 through which the optical axes 73a, 73b, 73c and 73d of the four lenses pass. The light-shielding spacer 74 blocks light incident on the solid-state imaging devices from the periphery of the camera module. Alight antireflection treatment is applied to inner walls forming the aperture 77. More specifically, a matting treatment is applied so as to suppress the reflection at the surface by black painting and surface roughening, for example. This can prevent the stray light reflected by the inner walls from entering in the solid-state imaging devices.

An imaging device holder 75 is attached to the face of the light-shielding spacer 74 on the side opposite to the subject. The imaging device holder 75 is made of silicon, and antireflection coating similar to that provided at the lens holder 72 is applied to the imaging device holder 75 at the face opposed to the lens holder 72. On the face of the imaging device holder 75 on the side of the light-shielding spacer 74, four solid state imaging devices 76a, 76b, 76c and 76d are arranged on a substantially common plane (on a X-Y plane). The optical axes 73a, 73b, 73c and 73d of the four lenses pass through the centers (a point of intersection of diagonal lines of a rectangular solid-state imaging device) of the respective four solid-state imaging devices substantially. Therefore, an interval between the centers of the solid-state imaging devices is substantially equal to an interval between the centers of the lenses.

An inside (on the lens side relative to the photoreceptive portion) of the solid-state imaging devices 76a and 76d corresponding to the lenses 71a and 71d optimized for green light is provided with color filters letting green wavelength range light pass therethrough. Similarly, an inside (on the lens side relative to the photoreceptive portion) of the solid-state imaging device 76b corresponding to the lens 71b optimized for red light is provided with a color filter letting red wavelength range light pass therethrough, and an inside (on the lens side relative to the photoreceptive portion) of the solid-state imaging device 76c corresponding to the lens 71c optimized for blue light is provided with a color filter letting blue wavelength range light pass therethrough.

Fig. 8 is a cross-sectional view of the camera module of Fig. 7 taken along the plane including the optical axes 73a and 73d. A substrate 81 including a digital signal processor (DSP) is provided on the imaging device holder 75, on which the four solid-state imaging devices 76a, 76b, 76c and 76d are arranged.

In the camera module of the present embodiment, the light incident on the lenses 71a, 71b, 71c and 71d from the subject arrive at the opposed solid-state imaging devices 76a, 76b, 76c and 76d, respectively. The solid-state imaging devices 76a and 76c detect green light via the green color filters provided therein. Similarly, the solid-state imaging device 76b detects red light, and the solid-state imaging device 76d detects blue light. Four images captured by these four solid-state imaging devices 76a, 76b, 76c and 76d are synthesized, whereby a color image can be obtained. Such synthesis is carried out by the digital signal processor (DSP).

The camera module of the present embodiment is the same as Embodiment 1 in the image processing procedure, a method for identifying origin positions of the solid-state imaging devices, the displacement of origins due to an ambient temperature change, a lens material and a method for holding the lenses with the lens holder. Therefore, the descriptions thereof are not repeated.

Since the camera module of the present embodiment uses aspherical lenses with diffraction gratings on both sides, the aberration can be reduced. Thus, a high-quality image can be obtained without the loss of resolution of the solid-state imaging devices having a fine pixel pitch. Furthermore, since the performance equivalent to that of an aspherical lens can be realized with a thinner lens, a camera module can be made thinner.

On the other hand, since a lens with a diffraction grating requires a fine configuration given to the surface thereof, the lens processing by molding with die does not always lead to good productivity when the lens is made of glass. This is because as the number of molding is increased, a protective film with which the surface of a molding piece, i.e., a die is coated becomes worn or deformed, and therefore the accuracy in shape will be degraded at an early stage. However, according to the camera module of the present embodiment, a resin can be used as the lens material, and therefore the durability of a die is improved significantly, and accordingly an aspherical lens with diffraction gratings on both sides can be manufactured at a low cost and in large quantity. As a method for forming a diffraction grating, dry etching and cutting are available in addition to the molding with die. However, dry etching has a difficulty in processing of a diffraction grating on an arbitrary curved surface, and cutting requires each face of a lens to be processed, and therefore both of them have a problem of poor productivity. Molding with die is the most suitable method for processing an aspherical lens with diffraction gratings on both sides. This is one of the advantages of the camera module of the present embodiment.

(Embodiment 3)

Fig. 9 is a cross-sectional view of a camera module of the present embodiment taken along the plane including optical axes 73a and 73d. The camera module of the present embodiment is different from the camera module of Embodiment 2 of Fig. 8 in that an actuator 90 is added to shift an imaging device holder 75 relative to a lens holder 72 along the optical axis. The same reference numerals are assigned to the same elements of the camera module of Embodiment 2 and their explanations are not repeated.

The actuator 90 includes a piezoelectric element 91, a rod-shaped driving shaft 92 with the longitudinal direction thereof arranged parallel to the Z-axis, a pair of supporting blocks 93a and 93b opposed in the Z direction and a friction operation unit 94. One end of the piezoelectric element 91 is fixed to the supporting block 93a, and the other end is connected with one end of the driving shaft 92. The other end of the driving shaft 92 is fixed to the supporting block 93b. The pair of supporting blocks 93a and 93b is fixed to an inner wall of a chassis 98. The driving shaft 92 penetrates through the friction operation unit 94, and supports the friction operation unit 94 by friction. The friction operation unit 94 holds the imaging device holder 75 via a linking arm 95.

The imaging device holder 75 is held in the chassis 98 via a plurality of actuators 90.

When a voltage is applied slowly to the piezoelectric element 91 to extend the same, the friction operation unit 94 is shifted along the Z-axis together with the driving shaft 92. Thereafter, when the voltage is removed abruptly, the piezoelectric element 91 shrinks in a flash and returns to the former state. However, the friction operation unit 94 does not move because of the inertia.

Alternatively, when a voltage rising steeply is applied to the piezoelectric element 91, the driving shaft 92 moves in a flash, but the friction operation unit 94 does not move because of the inertia. Thus, the friction operation unit 94 will move in the Z-axis direction relative to the driving shaft 92. Thereafter, when the voltage applied to the piezoelectric element 91 is removed slowly, the friction operation unit 94 moves together with the driving shaft 92.

By repeating such an operation, the friction operation unit 95 can be shifted in the Z-axis direction. By driving the plurality of actuators 90 in synchronization with one another, the imaging device holder 75, the substrate 81 including the digital signal processor (DSP) and four solid-state imaging devices 76a, 76b, 76c and 76d can be shifted integrally in the Z-axis direction via the friction operation unit 95.

The camera module of the present embodiment is a camera module having an autofocus function, further provided with a means for detecting a focal point and a control means for controlling a voltage to the piezoelectric element 91 in accordance with the focal point. A method for detecting a focal point is not limited especially, and for example a contrast of a subject image may be analyzed at a center portion of the field of view using an image obtained from the solid-state imaging devices, and the actuators 90 may be driven so as to enhance the contrast. The means for controlling the piezoelectric element 91 is not limited especially, and a well-known driving circuit for an actuator using a piezoelectric element can be used.

When an ambient temperature changes, an interval between the lenses and an interval between the solid-state imaging devices vary as described in Embodiments 1 and 2, and at the same time the focal point is displaced in the Z-axis direction, i.e., in the optical axis direction of the lenses. The displacement of the focal point in the optical axis direction results from a change of the thickness and the shape of the lenses and a change of the refractive index of a lens material due to the temperature change. Since a brighter lens with a smaller F-number has a shallower focal depth, such a lens has a tendency toward more remarkable degradation in image due to the displacement of focal point by the temperature change.

According to the camera module of the present embodiment, the solid-state imaging devices can be shifted in the optical axis direction. Therefore, even when the image-forming position of the subject image is shifted in the optical axis direction due to an ambient temperature change, such shift can be corrected easily. Therefore, a camera module with a still further reduced degree of degradation in image due to a temperature change can be realized.

Incidentally, although the solid-state imaging devices are shifted in the present embodiment, the lenses may be shifted instead. The actuator is not limited to the one using a piezoelectric element, as long as it can control a displacement. For instance, a solenoid-operated system is available.

In Fig. 9, the illustration of a light-shielding spacer 74 as described in Embodiment 2 is omitted. In order to make an interval between the lens holder 72 and the imaging device holder 75 variable, the not-illustrated light-shielding spacer of the present embodiment should be separated from one of the imaging device holder 75 and the lens holder 72. Alternatively, a light-shielding function may be imparted to the chassis 98, whereby the light-shielding spacer 74 may be omitted.

The present embodiment shows the example where the actuators are added to the camera module of Embodiment 2. Instead, such actuators may be added to the camera module of Embodiment 1.

The camera modules of Embodiments 1 to 3 use four solid-state imaging devices corresponding to four lenses, respectively. However, the camera module of the present invention is not limited to this. For instance, a single solid-state imaging device may be used, which can be divided into four imaging regions corresponding to the four lenses, respectively. In this case, the solid-state imaging device can be mounted easily, thus reducing a cost. Even in this case, the operation for identifying pixels of the origins of the divided four imaging regions is required.

In the camera modules of Embodiments 1 to 3, pixels of the solid-state imaging devices are arranged in the lattice form along the X-axis direction and the Y-axis direction so as to correspond to the arrangement of the optical axes of the four lenses. However, the camera module of the present invention is not limited to this. For instance, pixels may be arranged in the lattice form along the direction connecting optical axes of the lenses arranged in the diagonal positions (in the case of Embodiment 1, the direction connecting the optical axes 13a and 13d and the direction connecting the optical axes 13b and 13c). Alternatively, pixels may not be arranged in a lattice form.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

Industrial Applicability

According to the present invention, a thin, compact and high-definition camera module capable of achieving a stable image against an ambient temperature change can be realized. Therefore, the present invention can be used favorably to applications such as a camera for installation on mobile equipment, a surveillance camera or a vehicle-mounted camera.

**Claims**

1. A camera module comprising a plurality of single lenses and a plurality of imaging regions in one-to-one correspondence with the plurality of single lenses, wherein the plurality of single lenses form images of a subject in the plurality of imaging regions, respectively, and electrical signals from the plurality of imaging regions are synthesized so as to obtain an image, the camera module further comprising:

   a lens holder that holds the plurality of single lenses; and
   an imaging device holder that holds the plurality of imaging regions,
   wherein the lens holder and the imaging device holder are disposed so as to be opposed to each other,
   the lens holder comprises a member different from a member of the imaging device holder, and a linear expansion coefficient of a material of the lens holder is substantially equal to a linear expansion coefficient of a material of the imaging device holder, and
   the materials of the lens holder and the imaging device holder are different from a material of the plurality of single lenses.

2. The camera module according to claim 1 that measures a distance to the subject by comparing the electrical signals from the plurality of imaging regions.

3. The camera module according to claim 1, wherein the lens holder and the imaging device holder are both made of silicon.

4. The camera module according to claim 1, further comprising a spacer between the lens holder and the imaging device holder.

5. The camera module according to claim 1, wherein the plurality of single lenses are made of a resin so that the plurality of single lenses are independent of and separated from one another.

6. The camera module according to claim 1, further comprising a plurality of color filters in one-to-one correspondence with the plurality of single lenses,
   wherein at least one of the plurality of color filters lets red wavelength range light enter in the imaging region, at least another color filter lets green wavelength range light enter in the imaging region and at least still another color filter lets blue wavelength range light enter in the imaging region.

7. The camera module according to claim 6, wherein at least two of the plurality of color filters let light in a same wavelength range pass therethrough.

8. The camera module according to claim 1, wherein each of the plurality of single lenses comprises diffraction gratings on both sides.

9. The camera module according to claim 1, wherein optical axes of the plurality of single lenses are perpendicular to photoreceptive faces of the corresponding imaging regions, respectively, and pass substantially through centers of the corresponding imaging regions, respectively.

10. The camera module according to claim 1, further comprising:

a detector that detects a focal position of an subject image;
an actuator that changes an interval between the lens holder and the imaging device holder along an optical axis; and
a controller that controls the actuator in accordance with the focal position detected by the detector.

11. The camera module according to claim 3, wherein the spacer prevents the imaging region from receiving light passing through the single lenses other than the single lens corresponding to the imaging region.

12. The camera module according to claim 1, wherein a coating for suppressing surface reflection is applied to a face of the lens holder opposed to the imaging device holder and a face of the imaging device holder opposed to the lens holder.

13. The camera module according to claim 12,
wherein the coating comprises a single layer film with a refractive index of 2.1 and a thickness of 140 nm, and
the single layer film is made of a material selected from the group consisting of zinc sulfide, cerium oxide, tantalum oxide and titanium oxide.

14. The camera module according to claim 1,
wherein the lens holder that holds the plurality of single lenses is obtained by sandwiching the lens holder between a pair of molding pieces, followed by injection molding of a resin within a cavity formed with the lens holder and the pair of molding pieces.

15. The camera module according to claim 1,
wherein the lens holder that holds the plurality of single lenses is obtained by sandwiching the lens holder between a pair of molding pieces, filling a cavity formed with the lens holder and the pair of molding pieces with an ultraviolet curing resin, and curing the ultraviolet curing resin by irradiation with ultraviolet rays.

F I G. 1

FIG. 2

11b 17b 11a 17a

32 31

Red Green(auxiliary)

34 33

Green(standard) Blue

17d 17c

11d 11c

FIG. 3A

Light quantity

×

× ×

35a 35b 35c

FIG. 3B

FIG. 4

FIG. 5

FIG. 6

FIG. 7

FIG. 8

FIG. 9

FIG. 10

FIG. 11

FIG. 12

## INTERNATIONAL SEARCH REPORT

| | International application No. |
|---|---|
| | PCT/JP2005/018660 |

A. CLASSIFICATION OF SUBJECT MATTER
*H04N5/335*(2006.01), *H04N5/225*(2006.01), *H04N9/09*(2006.01)

According to International Patent Classification (IPC) or to both national classification and IPC

B. FIELDS SEARCHED

Minimum documentation searched (classification system followed by classification symbols)
*H04N5/335*(2006.01), *H04N5/225*(2006.01), *H04N9/09*(2006.01)

Documentation searched other than minimum documentation to the extent that such documents are included in the fields searched
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-36776 A (Mitsubishi Electric Corp.), 09 February, 2001 (09.02.01), Full text; all drawings & US 2002/89698 A1 & EP 1223739 A1 | 1-15 |
| Y | JP 2002-204462 A (Canon Inc.), 19 July, 2002 (19.07.02), Full text; all drawings & US 2002/122124 A1 | 1-15 |
| Y | JP 2002-171537 A (Canon Inc.), 14 June, 2002 (14.06.02), Full text; all drawings & US 2002/75450 A1 | 2,10 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December, 2005 (21.12.05) | 10 January, 2006 (10.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/018660 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2-201302 A  (Minolta Camera Co., Ltd.),<br>09 August, 1990 (09.08.90),<br>Full text; all drawings<br>(Family: none) | 3 |
| Y | JP 2001-61109 A  (Japan Science and Technology<br>Corp., Minolta Co., Ltd., Jun TANITA),<br>06 March, 2001 (06.03.01),<br>Full text; all drawings<br>& EP 1079613 A2 | 4,8,11 |
| Y | JP 2002-43555 A  (Canon Inc.),<br>08 February, 2002 (08.02.02),<br>Full text; all drawings<br>& US 2002/20845 A1 | 12,13 |
| Y | JP 2003-163819 A  (Matsushita Electric<br>Industrial Co., Ltd.),<br>06 June, 2003 (06.06.03),<br>Full text; all drawings<br>(Family: none) | 12,13 |
| Y | JP 2004-122772 A  (Nippon Sheet Glass Co., Ltd.),<br>22 April, 2004 (22.04.04),<br>Full text; all drawings<br>& US 2002/20845 A1       & EP 1550550 A1<br>& WO 2004/024444 A1 | 13 |
| Y | JP 2004-1400 A  (Murakami Corp.),<br>08 January, 2004 (08.01.04),<br>Full text; all drawings<br>& US 2003/215647 A1      & EP 1350772 A1<br>& CN 1450011 A | 13 |
| Y | JP 63-131101 A  (Nippon Sheet Glass Co., Ltd.),<br>03 June, 1988 (03.06.88),<br>Full text; all drawings<br>(Family: none) | 13 |

Form PCT/ISA/210 (continuation of second sheet) (April 2005)

**EP 1 720 340 A1**

**REFERENCES CITED IN THE DESCRIPTION**

**Patent documents cited in the description**

- JP 2001061109 A
- JP 2001078217 A
- JP 2001078127 A